# EUROPEAN PATENT APPLICATION

(11) **EP 4 488 456 A1**
(43) Date of publication of application: **08.01.2025**
(21) Application number: 24181998.6
(22) Date of filing: 13.06.2024
(51) Int. Cl.: E02F 9/26, B60K 35/00, H04N 7/18

(54) **CONTROL METHOD OF WORK MACHINE, CONTROL PROGRAM FOR WORK MACHINE, DISPLAY SYSTEM FOR WORK MACHINE, AND WORK MACHINE**

(30) Priority: 03.07.2023 JP 2023109084
(71) Applicant: Yanmar Holdings Co., Ltd., Osaka-shi, Osaka (JP)
(72) Inventor: Meyer, Thorsten, Crailsheim (DE); Kohlrautz, Ulf, Crailsheim (DE)
(74) Representative: Dennemeyer & Associates S.A.

(57) **Abstract**

[Problem] To provide a control method of work machine, a control program for work machine, a display system for work machine, and a work machine that are less likely to cause reduction in an amount of information that can be displayed on a display device and lowering in visibility.

[Solution] A control method of work machine has acquiring operation information related to an operation of an operation portion 22 of a display device 2 for a work machine, causing a display screen Dp1 to be displayed on a display portion 23 of the display device 2, and causing an operation menu M1 to be displayed at a position corresponding to the operation portion 22 in the display screen Dp1 on the basis of the operation information. The control method of work machine further has changing of the display screen Dp1 on the basis of the operation menu M1 according to an operation of the operation portion 22 in a state where the operation menu M1 is displayed.

## Description

### TECHNICAL FIELD

The present invention relates to a control method of work machine, a control program for work machine, a display system for work machine, and a work machine that are used in the work machine.

### BACKGROUND ART

As a related art, a work machine (backhoe) including a display device is known (for example, see Patent Document 1). In the work machine according to the related art, the display device includes a display portion and an operation portion. A display screen such as a home screen is displayed on the display portion. A selection-item display area is disposed in a lower part of the display screen, and various selection items are displayed in the selection-item display area.

The operation portion includes a plurality of operation switches disposed below the display portion (below the selection-item display area). The plurality of switches correspond one to-one to the selection items displayed in the selection-item display area. A function of accepting an instruction to select a corresponding one of the selection items displayed in the selection-item display area is assigned to each of the plurality of operation switches. That is, each of the plurality of operation switches accepts an instruction to select a corresponding selection item.

### PRIOR ART DOCUMENT

### PATENT DOCUMENT

Patent Document 1: Japanese Patent Application Publication No. 2022-32227

### SUMMARY OF INVENTION

### TECHNICAL PROBLEM

In the related art, the display area other than the selection item in the display screen is reduced by the size of the selection-item display area, and there is a possibility that an amount of information that can be displayed here is reduced, or a display size of each piece of information is reduced and visibility is lowered.

An object of the present invention is to provide a control method of work machine, a control program for work machine, a display system for work machine, and a work machine that are less likely to cause reduction in an amount of information that can be displayed on the display device and lowering in visibility.

### SOLUTION TO PROBLEM

A control method of work machine according to an aspect of the present invention includes acquiring operation information related to an operation of an operation portion of a display device for the work machine, causing a display screen to be displayed on a display portion of the display device, causing an operation menu to be displayed at a position corresponding to the operation portion in the display screen on the basis of the operation information, and changing the display screen on the basis of the operation menu according to an operation of the operation portion in a state where the operation menu is displayed.

A control program for work machine according to an aspect of the present invention is a program for causing one or more processors to execute the work-machine control method.

A display system for work machine according to an aspect of the present invention includes a display device for a work machine, an acquisition processing portion, and a display processing portion. The acquisition processing portion acquires operation information related to an operation of the operation portion of the display device. The display processing portion causes a display portion of the display device to display a display screen. The display processing portion causes an operation menu to be displayed at a position corresponding to the operation portion in the display screen on the basis of the operation information. The display processing portion changes the display screen on the basis of the operation menu according to an operation of the operation portion in a state in which the operation menu is displayed.

A work machine according to an aspect of the present invention includes the display system for work machine and a machine body on which the display device is mounted.

### ADVANTAGEOUS EFFECTS OF INVENTION

According to the present invention, a control method of work machine, a control program for work machine, a display system for work machine, and a work machine that are less likely to cause reduction in the amount of information that can be displayed on a display device and lowering in visibility can be provided.

### BRIEF DESCRIPTION OF DRAWINGS

FIG. 1 is a schematic perspective view illustrating an overall configuration of a work machine according to an Embodiment 1;
FIG. 2 is a schematic block diagram illustrating the work machine according to the Embodiment 1;
FIG. 3 is a schematic perspective view illustrating a driving portion of the work machine according to the first embodiment;
FIG. 4 is a schematic appearance view of a display device of a display system for work machine according to the Embodiment 1;
FIG. 5 is a diagram illustrating an example of a home screen displayed by the display system for work machine according to the Embodiment 1;
FIG. 6 is a diagram illustrating an example of the home screen displayed by the display system for work machine according to the Embodiment 1;
FIG. 7 is a diagram illustrating an example of a display pattern on the home screen displayed by the display system for work machine according to the Embodiment 1;
FIG. 8 is a diagram illustrating an example of displaying an operation menu on the home screen displayed by the display system for work machine according to the Embodiment 1;
FIG. 9 is a diagram illustrating an example of displaying the operation menu on the home screen displayed by the display system for work machine according to the Embodiment 1;
FIG. 10 is a diagram illustrating an example of a menu screen displayed by the display system for work machine according to the Embodiment 1;
FIG. 11 is a diagram illustrating an example of a setting screen displayed by the display system for work machine according to the Embodiment 1;
FIG. 12 is a flowchart illustrating an operation example of the display system for work machine according to the Embodiment 1; and
FIG. 13 is a diagram illustrating an example of the home screen displayed by the display system for work machine according to an Embodiment 2.

### DESCRIPTION OF EMBODIMENTS

Hereinafter, embodiments of the present invention will be described with reference to the accompanying drawings. Each of the following embodiments constitutes examples that embody the present invention, and has no intention to limit the technical scope of the present invention.

### (Embodiment 1)

### [1] Overall Configuration

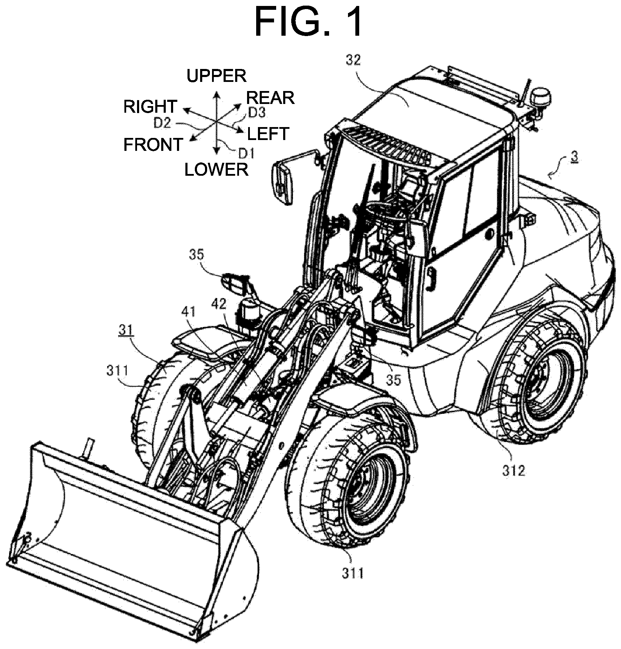

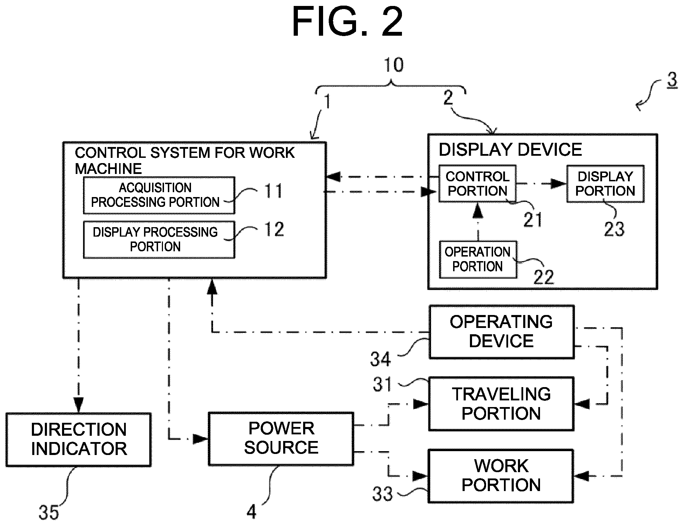

As illustrated in FIG. 1, a work machine 3 according to this Embodiment includes, in a machine body 30, a traveling portion 31, a driving portion 32, and a work portion 33. Moreover, as shown in FIG. 2, the work machine 3 further includes a control system 1 for a work machine (hereinafter, also simply referred to as a "control system 1"). In addition, the machine body 30 further includes a display device 2, an operating device 34, a direction indicator 35 and the like.

The "work machine" referred to in this disclosure means various types of work machines and is, for example, a work vehicle such as a wheel loader, a backhoe (including a hydraulic excavator, a mini excavator, and the like), and a carrier. The work machine 3 includes the work portion 33 that is configured capable of performing one or more works including at least a loading work. The work machine 3 is not limited to a "vehicle" and may be, for example, a working vessel, a working flying object such as a drone or a multicopter, or the like. Moreover, the work machine 3 is not limited to a construction machine (construction equipment), but may also be an agricultural machine (agricultural equipment), such as a rice transplanter, a tractor, or a combined harvester, for example. In this Embodiment, unless otherwise specified, a case where the work machine 3 is a riding-type wheel loader which can perform a transport work, an excavation work, a ground leveling work, suspending work or the like in addition to the loading work as the works will be explained as an example.

Moreover, in this Embodiment, for convenience of explanation, a vertical direction in a state where the work machine 3 is usable is defined as an up-down direction D1. Moreover, a front-rear direction D2 and a left-right direction D3 are defined with reference to a direction as viewed from a user (operator) on board the (driving portion 32 of) the work machine 3. In other words, each of the directions used in this Embodiment is a direction that is defined with the machine body 30 of the work machine 3 as a reference, and a direction in which the machine body 30 moves in a forward travel of the work machine 3 is a "front", and a direction in which the machine body 30 moves in a reverse travel of the work machine 3 is a "rear". Similarly, the direction in which the machine body 30 moves at a right turn of the work machine 3 is a "right", and the direction in which the machine body 30 moves at a left turn of the work machine 3 is a "left". However, these directions are not intended to limit the direction of use of the work machine 3 (the direction during use).

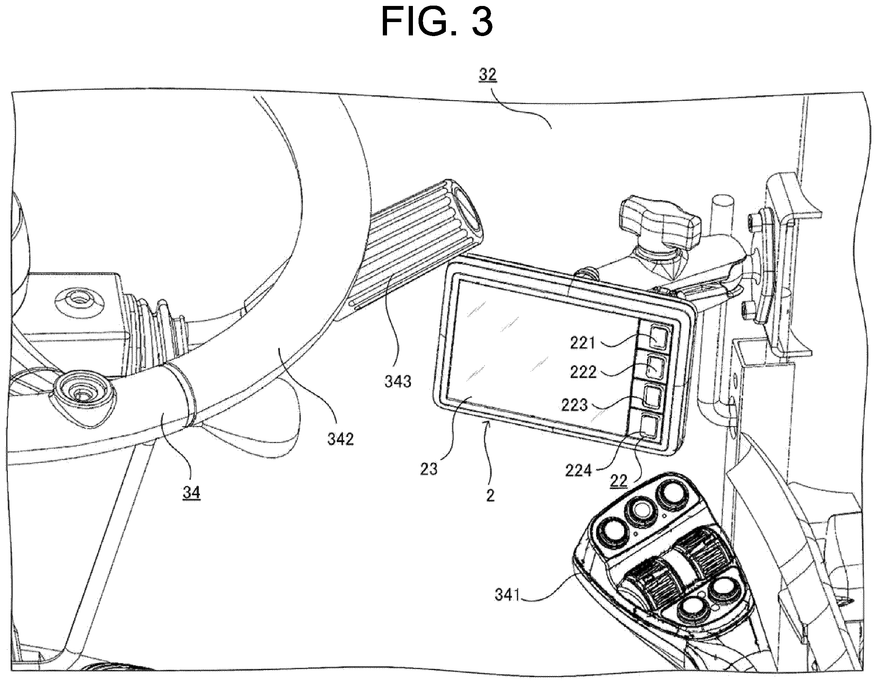

The work machine 3 includes a power source 4 (see FIG. 2) including an engine and the like. In the work machine 3, for example, a hydraulic pump is driven by the power source 4, and hydraulic oil is supplied from the hydraulic pump to a hydraulic actuator (including a hydraulic motor, hydraulic cylinders 41, 42, and the like) of each part of the machine body 30, whereby the machine body 30 is driven. Moreover, the work machine 3 is controlled, for example, by the user (operator), who is on board the driving portion 32 of the machine body 30, operating an operation lever 341 (see FIG. 3) and the like of the operating device 34.

In this Embodiment, as described above, since such a case that the work machine 3 is a riding-type wheel loader is assumed, the work portion 33 is driven in accordance with an operation of a user (operator) on board the driving portion 32 and performs works such as a loading work.

The traveling portion 31 has a traveling function and is configured capable of traveling (including turning) on the ground. The traveling portion 31 includes, for example, a pair of right and left front wheels 311 and a pair of right and left rear wheels 312. The traveling portion 31 further has a traveling motor for driving the front wheel 311 and the rear wheel 312 and a hydraulic actuator such as a steering cylinder and the like.

In the work machine 3 as a wheel loader, the machine body 30 is of a center-folding type and is configured such that the machine body 30 is folded at a connecting portion provided at a position between the front wheel 311 and the rear wheel 312. That is, in a state where the front part of the machine body 30 where the front wheels 311 are provided is bent to the right with respect to the rear part where the rear wheels 312 are provided, the machine body 30 travels while turning to the right direction by being driven forward by the traveling portion 31. On the other hand, in a state where the front part of the machine body 30 where the front wheels 311 are provided is bent to the left with respect to the rear part where the rear wheels 312 are provided, the machine body 30 travels while turning to the left direction by being driven forward by the traveling portion 31. The steering of the traveling portion 31 as above is realized by the front part of the machine body 30 driven to swing (rotate in both directions) around the connecting portion by the steering cylinder in conjunction with the operation of a steering handle 342 (see FIG. 3) of the operating device 34.

The driving portion 32 where the user is on board is provided above the traveling portion 31. Specifically, the driving portion 32 is disposed on a part on the rear side of the connecting portion in the machine body 30, that is, on a rear part where the rear wheel 312 is provided.

The work portion 33 is configured capable of performing works including a loading work. The work portion 33 has a bucket 331, an arm 332, and the like. The work portion 33 further has hydraulic actuators (including the hydraulic cylinders 41, 42 and the like) for driving each part.

The bucket 331 is a type of attachment (work tool) that can be attached to the machine body 30 of the work machine 3, and is constituted by optional tools selected in accordance with contents of a work from plural types of the attachment. The bucket 331 is, as an example, detachably attached to the machine body 30 and replaced in accordance with the contents of a work. The attachment for the work machine 3 includes various instruments such as a fork, a snow blade, and a plow and the like in addition to the bucket 331, for example. The work portion 33 performs a work by driving the bucket 331 with power from the power source 4.

The arm 332 is rotatably attached to the machine body 30. Specifically, the arm 332 is supported rotatably around a rotating shaft along a horizontal direction. The bucket 331 is attached to a distal end of the arm 332.

The work portion 33 operates by receiving power from the power source 4. Specifically, when a hydraulic pump is driven by the power source 4, and hydraulic oil is supplied to the hydraulic cylinder 41 as a bucket cylinder, for example, holding and turning of the bucket 331 are performed. Moreover, when the hydraulic oil is supplied to the hydraulic cylinder 42 as a boom cylinder (lift cylinder), an elevation operation of the bucket 331 is performed by vertical movement of the arm 332.

The traveling portion 31 operates by receiving power from the power source 4 similarly to the work portion 33.

That is, when the hydraulic oil is supplied from the hydraulic pump to the hydraulic actuators such as a traveling motor, a steering cylinder, and the like of the traveling portion 31, the traveling portion 31 operates.

The power source 4 is mounted on the machine body 30 and functions to supply power to each portion as described above. In this Embodiment, as an example, the power source 4 is a diesel engine. The power source 4 is driven by fuel (light oil in this case) supplied from a fuel tank.

The direction indicator 35 is disposed at a position visible from the surroundings of the machine body 30. A pair of right and left direction indicators 35 are provided and have a function of notifying a person around the machine body 30 of a turning direction (right turn or left turn) of the machine body 30 by lighting (flashing) thereof.

The control system 1 is configured mainly by a computer system having one or more processors such as a Central Processing Unit (CPU) and one or more memories such as a Read Only Memory (ROM) and a Random Access Memory (RAM), and executes various types of prepossessing (information processing). In this Embodiment, the control system 1 is an integrated controller that controls the entire work machine 3 and is composed of, for example, an Electronic Control Unit (ECU). However, the control system 1 may be provided separately from the integrated controller. The control system 1 will be specifically explained in a column of "[2] Configuration of control system".

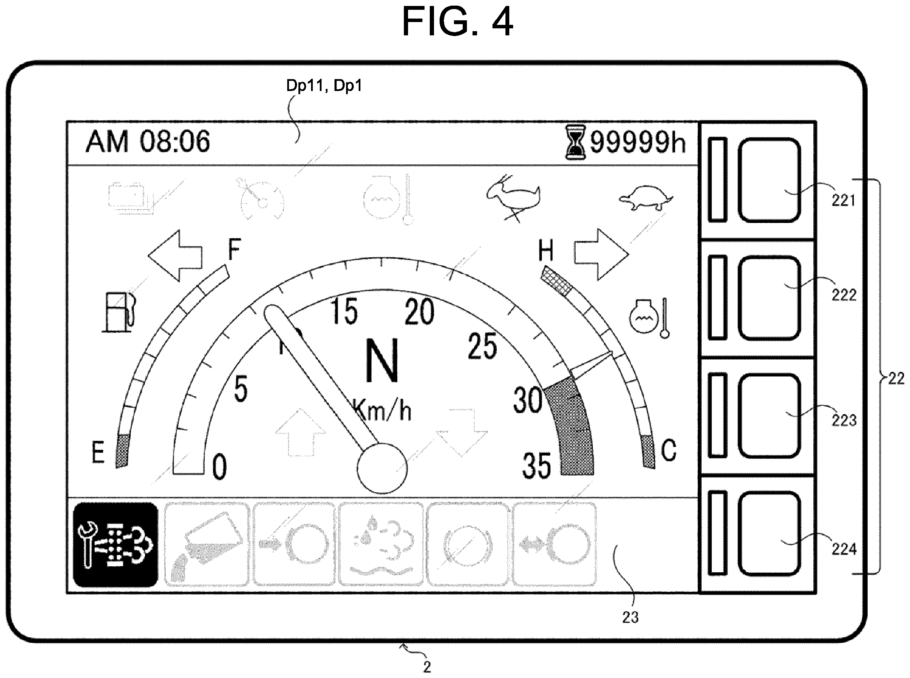

As shown in FIG. 3, the display device 2 is disposed in the driving portion 32 of the machine body 30 and is a user interface for accepting an operation input by a user (operator) and outputting various kinds of information to the user. The display device 2 accepts any of various operations from the user by outputting an electric signal that corresponds to the user's operation, for example. As a result, the user (operator) can visually recognize a display screen Dp1 (see FIG. 4) such as a home screen Dp11 (see FIG. 4) that is displayed on the display device 2 and operate the display device 2 as necessary.

As shown in FIG. 2, the display device 2 includes a control portion 21, an operation portion 22, and a display portion 23. The display device 2 is configured to be communicable with the control system 1 and can exchange data with the control system 1. In this Embodiment, as an example, the display device 2 is a dedicated device used for the work machine 3.

The control portion 21 controls the display device 2 in accordance with data from the control system 1. Specifically, the control portion 21 outputs an electric signal corresponding to an operation by the user and accepted by the operation portion 22 and causes the display screen Dp1 generated by the control system 1 to be displayed on the display portion 23 or the like.

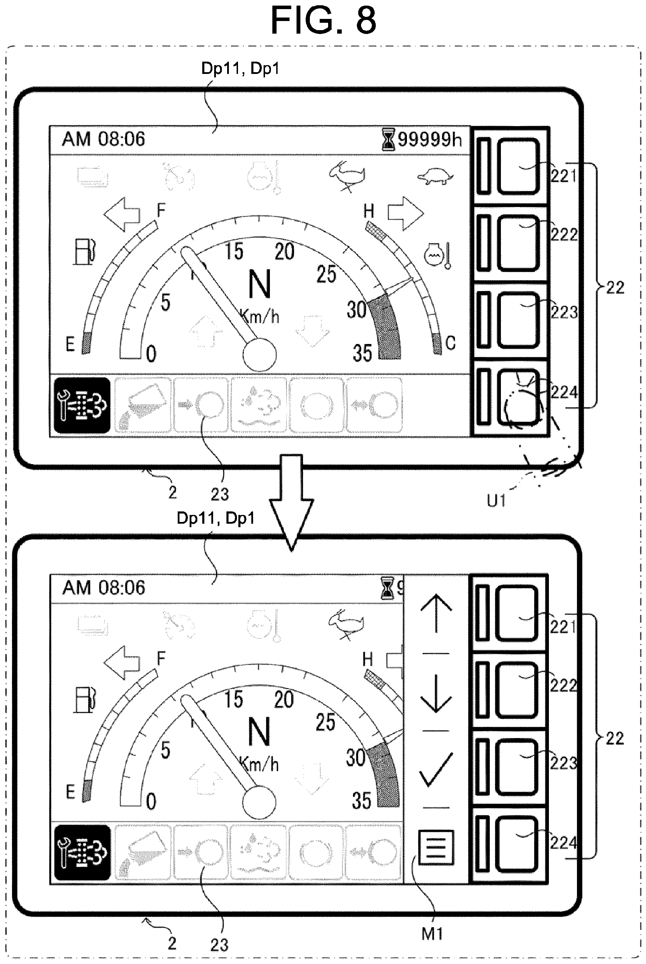

The operation portion 22 is a user interface for accepting an operation input by the user (operator) to the display screen Dp1 displayed on the display portion 23. The operation portion 22 accepts the various operations by a user U1 by outputting an electric signal corresponding to the operation by the user U1 (see FIG. 8). In this Embodiment, as an example, the operation portion 22 includes a plurality of (four, here) mechanical push button switches 221 to 224 as shown in FIG. 3 and FIG. 4.

The plurality of push button switches 221 to 224 are disposed adjacent to a display area (right side in the example in FIG. 3) so as to follow a peripheral edge the display area of the display portion 23. The plurality of push button switches 221 to 224 are associated with items displayed on the display screen Dp1 such as the home screen Dp11 or the like, which will be described below, and when any one of the plurality of push button switches 221 to 224 is operated, any one of items on the display screen Dp1 is operated (selected).

Moreover, the operation portion 22 may include a touch panel, an operation dial and the like. In this case, too, any one of the items on the display screen Dp1 is operated (selected) in accordance with an operation on the operation portion 22.

The display portion 23 is a user interface for presenting information to the user U1 (operator), such as a liquid-crystal display or an organic EL display that displays various types of information. The display portion 23 presents various types of information to the user by means of display. In this Embodiment, as an example, the display portion 23 is a full-color liquid crystal display with a back light, and has a "laterally long" display area which is longer in a lateral direction as shown in FIG. 3 and FIG. 4.

The display device 2 presents various kinds of information to the user U1 (operator) who operates the work machine 3 on the display screen Dp1 such as the home screen Dp11. That is, the user U1 who operates the work machine 3 can visually obtain various kinds of information related to the work machine 3 by viewing the display screen Dp1 displayed on the display device 2. As an example, when information related to an operation state of the work machine 3 such as a traveling speed (car speed), a cooling water temperature, a hydraulic oil temperature and the like are displayed on the display device 2, the user U1 can confirm the information related to the operation state of the work machine 3 required for the operation of the work machine 3 on the display device 2.

As shown in FIG. 3, the operating device 34 is disposed in the driving portion 32 of the machine body 30 and accepts an operation input by the user (operator). In this Embodiment, as one example, the operating device 34 has the operation lever 341, the steering handle 342, a direction indicator lever 343 and the like.

The operation lever 341 is an operation tool for accepting an operation of the work portion 33. The steering handle 342 is an operation tool for accepting an operation of steering of the traveling portion 31. The direction indicator lever 343 is an operation tool for accepting an operation of the direction indicator 35.

That is, when the direction indicator lever 343 accepts a right turn operation (involving a right turn of the traveling portion 31), the control system 1 causes the direction indicator 35 on the right side to be lighted (flashed) to notify a person around the machine body 30 that the machine body 30 is to turn right (right turn). Similarly, when the direction indicator lever 343 accepts a left turn operation (involving a left turn of the traveling portion 31), the control system 1 causes the direction indicator 35 on the left side to be lighted (flashed) to notify a person around the machine body 30 that the machine body 30 is to turn left (left turn).

Moreover, in addition to the above-described configuration, the machine body 30 further includes a detection portion (including a sensor, a camera and the like) for monitoring the periphery of the machine body 30, a sound output portion, a communication terminal, a fuel tank, a battery and the like. Furthermore, the machine body 30 includes sensors for monitoring the operation state of the machine body 30, such as a fuel residual-quantity gauge, a cooling-water temperature sensor, a hydraulic-oil temperature sensor, a rotation number meter for measuring the number of engine rotations, a speedometer for measuring a traveling speed, an hour meter for measuring an operating time and the like.

### [2] Configuration of Control System

Subsequently, a configuration of the control system 1 according to this Embodiment will be explained with reference to FIG. 2. The control system 1 causes the display device 2 to display the display screen Dp1 such as the home screen Dp11 by controlling the display device 2. That is, in this Embodiment, the control system 1 has a function as a display control system for a work machine that controls at least the display device 2. This control system 1 constitutes a display system 10 for a work machine together with the display device 2. In other words, the display system 10 for a work machine according to this Embodiment includes the control system 1 and the display device 2.

In this Embodiment, the display device 2 is mounted on the machine body 30 of the work machine 3 as described above. The control system 1 is a constituent element of the work machine 3 and constitutes the work machine 3 together with the machine body 30 and the like. In other words, the work machine 3 according to this Embodiment includes at least the control system 1 and the machine body 30 (including the traveling portion 31, the driving portion 32, and the work portion 33) on which the display device 2 is mounted.

The "screen" such as the home screen Dp11 referred to in this Embodiment means a video (image) displayed on the display device 2 and includes a figure, a diagram, a photograph, a text, a moving image and the like. That is, the control system 1 can cause the display device 2 to display the display screen Dp1 such as the home screen Dp11 and the like including the figures and the like that indicate information related to the operation state of the work machine 3 such as a traveling speed (car speed), a cooling water temperature and a hydraulic oil temperature and the like, for example. Here, when the display screen Dp1 includes a video and the like, the display screen Dp1 includes not a constant image but a video that changes every moment.

As shown in FIG. 2, the control system 1 includes an acquisition processing portion 11 and a display processing portion 12. In this Embodiment, as an example, the control system 1 is mainly composed of a computer system including one or more processors and thus, the one or more processors execute a program for a work machine to realize these plural functional portions (the display processing portion 12 and the like). These plural functional portions included in the control system 1 may be distributed and provided separately in plural casings or may be provided in a single casing.

The control system 1 is configured capable of communicating with devices provided in respective parts of the machine body 30. That is, to the control system 1, at least the display device 2, the operating device 34, the direction indicator 35 and the like are connected. As a result, the control system 1 can control the display device 2, the direction indicator 35 and the like and can acquire the operation states of the display device 2 and the operating device 34. Here, the control system 1 may directly exchange various types of information (data) with each of the devices or may indirectly perform exchange via a relay or the like.

The acquisition processing portion 11 executes acquisition processing of acquiring information related to the operation states of the display device 2 and the operating device 34 and information related to detection results of sensors for monitoring the operation state of the machine body 30. That is, the control system 1 accepts various operations for controlling the work machine 3 in the acquisition processing portion 11 and accepts outputs of the sensors for monitoring the operation state of the machine body 30 such as a fuel residual-quantity gauge.

Specifically, the operation portion 22 of the display device 2 outputs an operation signal corresponding to an operation by the user U1, and the acquisition processing portion 11 acquires the operation signal. Similarly, the direction indicator lever 343 of the operating device 34 outputs an operation signal corresponding to the operation of the user U1, whereby the acquisition processing portion 11 acquires the operation signal. Furthermore, the acquisition processing portion 11 acquires sensor signals from the sensors that monitor the operation state of the machine body 30, such as a cooling-water temperature sensor, a hydraulic-oil temperature sensor, a rotation number meter that measures the number of the engine rotations, a speedometer that measures the traveling speed, and an hour meter that measures the operating time and the like. The data acquired by the acquisition processing portion 11 is stored in a memory or the like, for example.

The display processing portion 12 executes display processing of causing the display device 2 to display at least the display screen Dp1 such as the home screen Dp11. Specifically, the display processing portion 12 generates the display screen Dp1 on the basis of data acquired by the acquisition processing portion 11 and the like and causes the display device 2 to display the display screen Dp1 on the display portion 23 of the display device 2 by controlling the display device 2. Furthermore, the display processing portion 12 acts in accordance with an operation accepted by the operation portion 22 of the display device 2.

### [3] Control Method of Work Machine

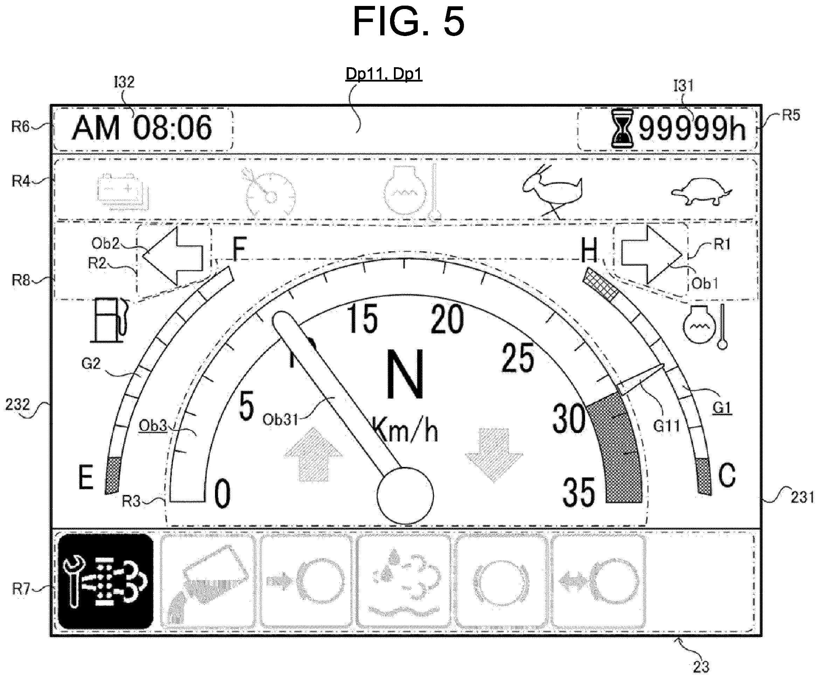

Hereinafter, an example of a control method of the work machine 3 (hereinafter, referred to simply as a "control method") executed mainly by the control system 1 will be explained with reference to FIG. 5 to FIG. 12.

The control method according to this Embodiment is executed by the control system 1 mainly configured by a computer system, in other words, the control method is embodied by a control program for work machine (hereinafter, simply referred to as a "control program"). That is, the control program according to this Embodiment is a computer program for causing one or more processors to execute each processing related to the control method. The control program as above may be executed by the control system 1 and the display device 2 in cooperation with each other, for example.

Here, the control system 1 executes the following various types of processing related to the control method, when a specific start operation set in advance for causing the control program to be executed is performed. The start operation is, for example, an activation operation of the power source 4 (engine) of the work machine 3 or the like. On the other hand, when a specific end operation set in advance is performed, the control system 1 ends the following various types of processing related to the control method. The end operation is, for example, an operation of stopping the power source 4 of the work machine 3 or the like.

### [3.1] Display Screen

Herein, first, a configuration of the display screen Dp1 displayed on the display portion 23 of the display device 2 by the control method according to this Embodiment will be explained. In the drawings illustrating the display screen Dp1 displayed on the display portion 23 of the display device 2 such as FIG. 5, a one-dot chain line, a leading line, and a reference sign indicating areas are merely for an illustrative purpose and may not be actually displayed on the display device 2.

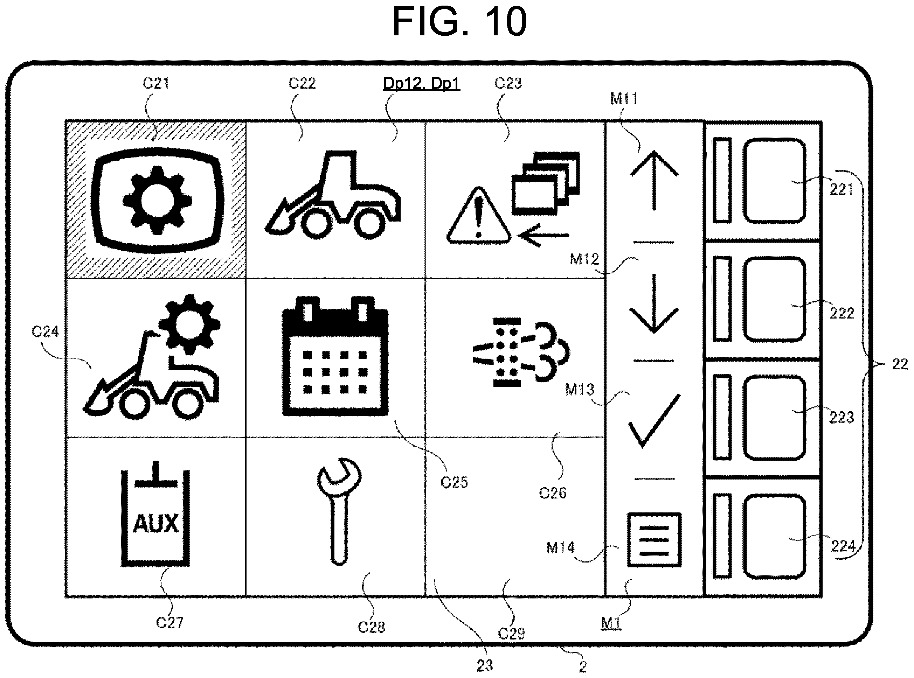

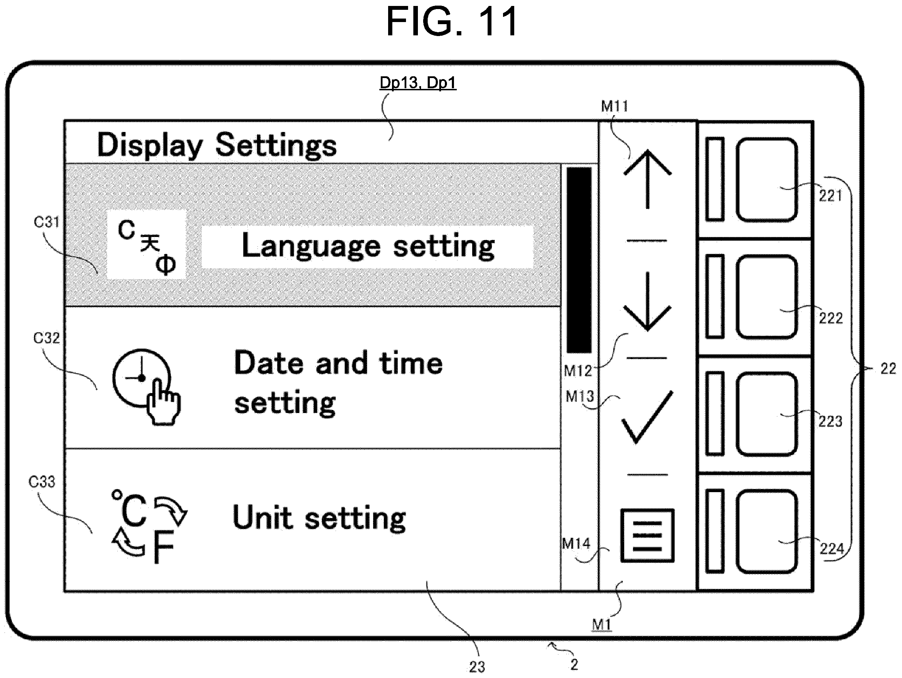

The display screen Dp1 shown in FIG. 5 is the home screen Dp11 that is first displayed by the control method. The home screen Dp11 is a basic display screen Dp1 first displayed on the display device 2 while the work machine 3 is in operation. The display screen Dp1 can shift from the home screen Dp11 to various display screens Dp1 including a menu screen Dp12 (see FIG. 10), a setting screen Dp13 (see FIG. 11) and the like in accordance with an operation on the operation portion 22.

As shown in FIG. 5, the home screen Dp11 as the display screen Dp1 includes a first area R1, a second area R2, a third area R3, a fourth area R4, a fifth area R5, a sixth area R6, and a seventh area R7. The home screen Dp11 further includes an eighth area R8 (an example of a "band area") including the first area R1 and the second area R2.

Specifically, the home screen Dp11 is divided into three areas in a vertical direction (up-down direction). In the uppermost area, the fifth area R5 and the sixth area R6 are disposed in this order from the right. In the center (second from the top) area, the fourth area R4, the eighth area R8 (including the first area R1 and the second area R2) and the third area R3 are disposed in this order from the top. In the lowermost area, the seventh area R7 is disposed. Among the three areas divided in the vertical direction, a size in the vertical direction is the widest in the areas (including the fourth area R4, the eighth area R8, and the third area R3) in the middle (second from the top). A size in the lateral direction is the widest in the fourth area R4, the seventh area R7, and the eighth area R8, since they are formed across the both side edges in the lateral direction (left-right direction) of the display area of the display portion 23.

However, the disposition and size of each of these areas are merely examples and can be changed as appropriate. Moreover, it is not indispensable that the areas are clearly divided by a boundary line. For example, in the example shown in FIG. 5, too, the three areas divided in the vertical direction are clearly divided by boundary lines, while there is no boundary line between the fifth area R5 and the sixth area R6. It is needless to say that the fifth area R5 and the sixth area R6 may be clearly divided by the boundary line.

The third area R3 is disposed below the first area R1 and the second area R2 and at the center in the lateral direction (left-right direction) of the home screen Dp11. A third object Ob3 is displayed in the third area R3. The third object Ob3 is information related to the work machine 3 and in particular indicates information related to the operation state of the work machine 3. In this Embodiment, as an example, the third object Ob3 indicates a traveling speed (car speed) of the work machine 3.

That is, a movement speed of the work machine 3 can be displayed as the third object Ob3 in the third area R3. The display processing portion 12 generates the third object Ob3 in the display screen Dp1 (home screen Dp11) on the basis of the outputs (sensor signals) of the car speed sensor acquired by the acquisition processing portion 11.

In this Embodiment, the third object Ob3 is a graph representing an analog meter.

In the analog meter, a needle Ob31 rotates, and a value is presented by a position of the needle Ob31. That is, the third object Ob3 is information acquired by indexing the movement speed of the work machine 3 and represented by the position of the needle Ob31 in the graph. Since the movement speed of the work machine 3 is displayed as a graph, there is such an advantage that the user has good visibility and can intuitively understand the movement speed of the work machine 3. The third object Ob3 is not limited to a mode in which the movement speed of the work machine 3 is represented by a numerical value or the like, and may be, for example, a mode in which the movement speed is represented by pictures such as figures (icons) in a stepwise manner or the like.

Here, cooling-water temperature information G1 indicating the cooling water temperature is displayed on the right side of the third area R3 on the home screen Dp11. Residual quantity information G2 indicating the fuel residual quantity is displayed on the left side of the third area R3 on the home screen Dp11. That is, the cooling-water temperature information G1 is disposed below the first area R1 in the home screen Dp11, and the residual quantity information G2 is disposed below the second area R2 in the home screen Dp11.

Similarly to the third object Ob3, the cooling-water temperature information G1 is a graph representing an analog meter. In the analog meter, a needle G11 rotates, and a value is presented by a position of the needle G11. That is, the cooling-water temperature information G1 is information acquired by indexing the cooling water temperature included in the operation state of the work machine 3 and represented by the position of the needle G11 in the graph. Since the cooling-water temperature information G1 is displayed in the form of a graph, there is such an advantage that the user has good visibility and can intuitively understand the operation state of the work machine 3.

The residual quantity information G2 is a bar graph. That is, the residual quantity information G2 is information acquired by indexing the residual quantity of a monitoring target (in this case, fuel) and represented by a length (height) of the bar graph. Since the residual quantity information G2 is displayed as a graph (bar graph), there is such an advantage that the user has good visibility and can intuitively understand the residual quantity of the monitoring target. The residual quantity information G2 only needs to be information regarding the residual quantity in the monitoring target, and may be not only information indicating the residual quantity itself by a numerical value or the like, but also, for example, information indicating the residual quantity in steps by a picture of a figure (icon) or the like, and information indirectly indicating the residual quantity by indicating a consumption amount of the monitoring target.

Here, the third object Ob3 is a substantially semi-circular arc-shaped figure with the rotation center of the needle Ob31 as a center. And the cooling-water temperature information G1 and the residual quantity information G2 disposed adjacent to the third object Ob3 are also substantially arc-shaped figures curved along an outer periphery of the third object Ob3. In other words, the cooling-water temperature information G1 and the residual quantity information G2 are disposed on a concentric circle that is slightly larger than the third object Ob3. As a result, the third object Ob3, the cooling-water temperature information G1, and the residual quantity information G2 are displayed in a form similar to a so-called single-eye meter, which improves the visibility for the operator.

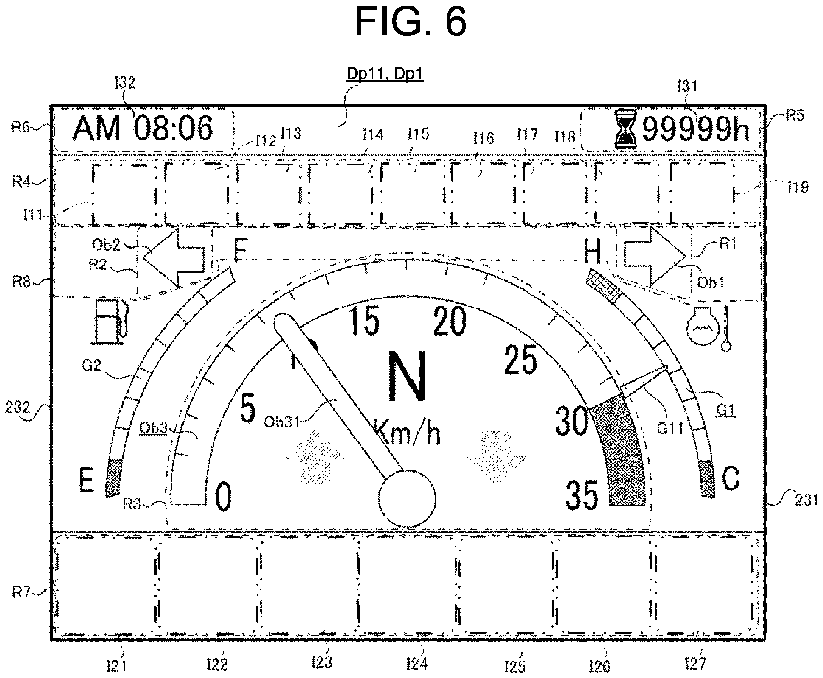

The fourth area R4 is formed above the first area R1 and the second area R2 across both side edges in the lateral direction of the display area of the display portion 23. In the fourth area R4, figures (icons) I11 to 119 (see FIG. 6) corresponding to the operation states of the respective parts of the work machine 3 is displayed. In FIG. 6, the outer shapes of the plurality of figures I11 to 119 are shown by imaginary lines (two-dot chain lines).

In the fourth area R4, a plurality of (for example, nine) figures I11 to I19 can be individually displayed side by side, and by means of the design (picture) of each of the figures I11 to I19, any one of the states of the battery, the cooling water temperature, the hydraulic oil temperature, and the like is represented, for example. Here, each of the figures I11 to I19 indicates an operation state by a display mode such as a display color, a size and the like. The display processing portion 12 determines the states of respective parts of the work machine 3 using outputs from various sensors (including the cooling-water temperature sensor and the hydraulic-oil temperature sensor) that detect the operation states of the respective parts of the work machine 3. When an anomalous value is detected in any of the parts, the display processing portion 12 performs a warning display by, for example, changing the display mode such as the display color or the like of the figures I11 to I19 of the part.

The fifth area R5 is disposed above the fourth area R4 and at the upper right corner of the home screen Dp11 (above the first area R1). In the fifth area R5, for example, operating time information I31 related to the operating time (hour meter) of the work machine 3 is displayed.

The sixth area R6 is disposed above the fourth area R4 and at the upper left corner of the home screen Dp11 (above the second area R2). In the sixth area R6, for example, time information I32 indicating the current time is displayed.

The seventh area R7 is formed below the third area R3 across the both side edges in the lateral direction of the display area of the display portion 23. In the seventh area R7, figures (icons) I21 to I27 (see FIG. 6) corresponding to the operation states of the respective parts of the work machine 3 are displayed. In FIG. 6, the outer shapes of the plurality of figures I21 to I27 are shown by imaginary lines (two-dot chain lines).

In the seventh area R7, a plurality of (as an example, seven) figures I21 to I27 can be individually displayed side by side, and the design (picture) of each of the figures I21 to I27 indicates, for example, which state of the brake, the filter temperature or the like is represented. Here, each of the figures I21 to I27 indicates an operation state by a display mode such as a display color, a size or the like, for example. The display processing portion 12 determines the states of respective parts of the work machine 3 using outputs from various sensors (including the cooling-water temperature sensor and the hydraulic-oil temperature sensor) that detect the operation states of the respective parts of the work machine 3. Then, the display processing portion 12 displays the figures I21 to I27 corresponding to the operation states of the respective parts and performs notification.

A first object Ob1 is displayed in the first area R1. The first object Ob1 is a figure displayed in accordance with the lighting state of the direction indicator 35 on the right side of the work machine 3. In the home screen Dp11, only a background area (for example, a black area in the case of a "black background") in which nothing is displayed is interposed between the first area R1 and a right side edge 231 of the display area of the display portion 23. Therefore, the first object Ob1 displayed in the first area R1 is disposed at a position opposed to the right side edge 231 of the display area of the display portion 23 with the non-display area interposed therebetween in the display screen Dp1 (home screen Dp11). As a result, the first object Ob1 displayed correspondingly to the direction indicator 35 on the right side is displayed at the right end part of the display screen Dp1 so as to be adjacent to the right side edge 231 of the display area of the display portion 23. Thus, for example, as compared with a case where the first object Ob1 is displayed near the center of the display area, the visibility of the first object Ob1 is improved for the operator, and the operator can intuitively grasp easily that the first object Ob1 corresponds to the direction indicator 35 on the right side.

The second object Ob2 is displayed in the second area R2. The second object Ob2 is a figure displayed in accordance with the lighting state of the direction indicator 35 on the left side of the work machine 3. In the home screen Dp11, only a background area (for example, a black area in the case of a "black background") in which nothing is displayed is interposed between the second area R2 and a left side edge 232 of the display area of the display portion 23. Therefore, the second object Ob2 displayed in the second area R2 is disposed at a position opposed to the left side edge 232 of the display area of the display portion 23 with the non-display area interposed therebetween in the display screen Dp1 (home screen Dp11). As a result, the second object Ob2 displayed correspondingly to the direction indicator 35 on the left side is displayed at the left end part of the display screen Dp1 so as to be adjacent to the left side edge 232 of the display area of the display portion 23. Thus, for example, as compared with a case where the second object Ob2 is displayed near the center of the display area, the visibility of the second object Ob2 is improved for the operator, and the operator can intuitively grasp easily that the second object Ob2 corresponds to the direction indicator 35 on the left side.

The first object Ob1 and the second object Ob2 are displayed in conjunction with the pair of left and right direction indicators 35. That is, the display processing portion 12 does not display the first object Ob1 and the second object Ob2 on the home screen Dp11 all the time but displays them in conjunction with the operation of the direction indicator 35.

That is, when the direction indicator 35 on the right side flashes, the display processing portion 12 alternately repeats display / non-display of the first object Ob1 in the first area R1 in conjunction with the flashing of the direction indicator 35, thereby causing the first object Ob1 to flash in a pseudo manner. In other words, the display processing portion 12 intermittently displays the first object Ob1 so as to correspond to the lighting state (flashing) of the direction indicator 35 on the right side.

Similarly, when the direction indicator 35 on the left side flashes, the display processing portion 12 alternately repeats display / non-display of the second object Ob2 in the second area R2 in conjunction with the flashing of the direction indicator 35, thereby causing the second object Ob2 to flash in a pseudo manner. In other words, the display processing portion 12 intermittently displays the second object Ob2 so as to correspond to the lighting state (flashing) of the direction indicator 35 on the left side.

Here, it is preferable that the display processing portion 12 matches timing of switching between display / non-display of each of the first object Ob1 and the second object Ob2 with the timing of turning on / off (flashing) of each of the corresponding direction indicators 35. However, the display processing portion 12 only needs to display each of the first object Ob1 and the second object Ob2 in accordance with the lighting state of each of the corresponding direction indicators 35, and it is not indispensable to match even the timing of switching between display / non-display. Moreover, for example, when the direction indicator 35 is flashing, it is not indispensable, either that the display processing portion 12 causes the corresponding first object Ob1 or second object Ob2 to flash in a pseudo manner (switch between display / non-display), but may continue to display them so that they appear to be continuously lit.

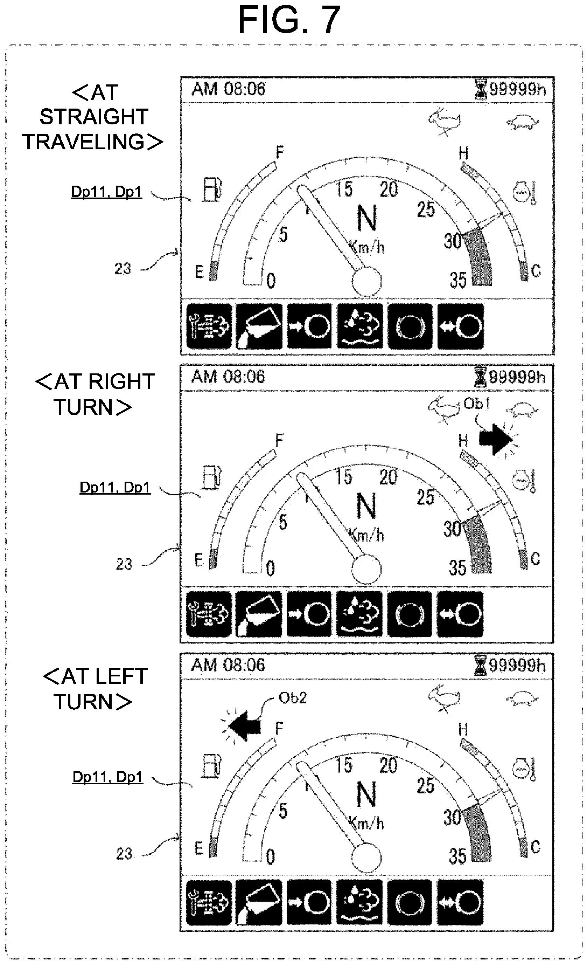

FIG. 7 is a diagram showing a display example of the first object Ob1 and the second object Ob2. As shown in the uppermost stage of FIG. 7, at "straight traveling", the direction indicator lever 343 is not operated and both the pair of left and right direction indicators 35 are in the turned-off state and thus, neither the first object Ob1 nor the second object Ob2 is displayed on the home screen Dp11.

As shown in the middle (the second row from the top) of FIG. 7, at the time of "turning right" (accompanied by a right turn of the traveling portion 31), the direction indicator lever 343 accepts a right turn operation, and only the direction indicator 35 on the right side of the pair of left and right direction indicators 35 is lit (flashes). Therefore, only the first object Ob1 in the first object Ob1 and the second object Ob2 is displayed on the home screen Dp11. At this time, display / non-display of the first object Ob1 is alternately repeated in accordance with turning-on / off (flashing) of the direction indicator 35 on the right side.

As shown in the lowermost stage of FIG. 7, at the time of "turning left" (accompanied by a left turn of the traveling portion 31), the direction indicator lever 343 accepts an operation of turning left, and only the direction indicator 35 on the left side of the pair of left and right direction indicators 35 is lit (flashes). Therefore, only the second object Ob2 in the first object Ob1 and the second object Ob2 is displayed on the home screen Dp11. At this time, display / non-display of the second object Ob2 is alternately repeated in accordance with turning-on / off (flashing) of the direction indicator 35 on the left side.

As described above, the control method according to this Embodiment includes causing the display screen Dp1 (home screen Dp11) to be displayed on the display portion 23 of the display device 2 for the work machine 3 including the pair of left and right direction indicators 35, causing the first object Ob1 corresponding to the lighting state of the direction indicator 35 on the right side of the work machine 3 to be displayed on the display screen Dp1 (home screen Dp11), and causing the second object Ob2 corresponding to the lighting state of the direction indicator 35 on the left side of the work machine 3 to be displayed on the display screen Dp1 (home screen Dp11). The first object Ob1 is disposed at a position on the display screen Dp1 (home screen Dp11) opposed to the right side edge 231 of the display area of the display portion 23 with the non-display area interposed therebetween. The second object Ob2 is disposed at a position on the display screen Dp1 (home screen Dp11) opposed to the left side edge 232 of the display area of the display portion 23 with the non-display area interposed therebetween.

According to this configuration, since the lighting state of the direction indicator 35 installed toward the periphery of the work machine 3 is displayed on the display device 2, there is an advantage that the operator can easily grasp the lighting state of the direction indicator 35. Moreover, the first object Ob1 is disposed at the position opposed to the right side edge 231 of the display area of the display portion 23 with the non-display area interposed therebetween and at the position opposed to the left side edge 232 of the display area of the display portion 23 with the non-display area interposed therebetween. Therefore, compared with a case where the first object Ob1 and the second object Ob2 are displayed near the center of the display area, the visibility of the first object Ob1 and the second object Ob2 is improved for the operator, and the operator can intuitively grasp easily that the first object Ob1 and the second object Ob2 correspond to the direction indicators 35 on the right side and the left side, respectively. In particular, for example, when the display area of the display portion 23 is relatively small, or even when the display device 2 is disposed on the side of the driver's seat due to restriction of a space in the driving portion 32, it is easy to ensure sufficient visibility of the first object Ob1 and the second object Ob2.

In more detail, the first object Ob1 and the second object Ob2 include figures indicating specific directions, respectively, and the figures are directed to the outside of the display area. In this Embodiment, as an example, each of the first object Ob1 and the second object Ob2 is a figure having an "arrow" shape pointing to a respective specific direction. The first object Ob1 opposed to the right side edge 231 of the display area of the display portion 23 is formed of an arrow-shaped figure directed to the right side which is the outside of the display area, that is, the right side edge 231. The second object Ob2 opposed to the left side edge 232 of the display area of the display portion 23 is formed of an arrow-shaped figure directed to the left side which is the outside of the display area, that is, the left side edge 232. Since the first object Ob1 and the second object Ob2 include the figures indicating the outside of the display area as described above, the operator can intuitively grasp easily that the first object Ob1 and the second object Ob2 correspond to the direction indicators 35 on the right side and the left side, respectively.

However, the figure included in each of the first object Ob1 and the second object Ob2 is not limited to the arrow-shaped one but only needs to be a figure pointing to a specific direction, and may be, for example, a triangular shape or a figure representing a human finger or the like. Moreover, in this Embodiment, as an example, each of the first object Ob1 and the second object Ob2 is assumed to be a "green" arrow-shaped figure, but the display colors of the first object Ob1 and the second object Ob2 can also be changed as appropriate.

Moreover, in this Embodiment, the first object Ob1 and the second object Ob2 are symmetrical with respect to the display screen Dp1 (the home screen Dp11). That is, the first object Ob1 and the second object Ob2 have symmetrical positions and symmetrical shapes with respect to a symmetrical line passing through the center of the home screen Dp11 in the lateral direction (left-right direction). As a result, the operator can intuitively grasp easily that the first object Ob1 and the second object Ob2 correspond to the direction indicators 35 on the right side and the left side, respectively.

Moreover, in this Embodiment, a third object Ob3 indicating the movement speed of the work machine 3 is displayed below the first object Ob1 and the second object Ob2 on the display screen Dp1 (home screen Dp11). As a result, the first object Ob1 and the second object Ob2 corresponding to the direction indicators 35 can be displayed by being clearly distinguished from the movement speed of the work machine 3. Furthermore, the first object Ob1 and the second object Ob2 can be visually recognized naturally by the operator when viewing the movement speed of the work machine 3.

Moreover, operation information related to the operation state of the work machine 3 is displayed above the first object Ob1 and the second object Ob2 on the display screen Dp1 (home screen Dp11). In this Embodiment, the figures I11 to I19 displayed in the fourth area R4 are an example of the "operation information". That is, in the fourth area R4 disposed above the first area R1 and the second area R2, the figures I11 to I19 corresponding to the operation states of respective parts of the work machine 3 are displayed as the operation information. As a result, the first object Ob1 and the second object Ob2 corresponding to the direction indicators 35 can be displayed by being clearly distinguished from the operation information (the figures I11 to I19) of the work machine 3. Furthermore, the operator can visually recognize the first object Ob1 and the second object Ob2 naturally when viewing the operation information (the figures I11 to I19) of the work machine 3.

Moreover, below the first object Ob1 in the display screen Dp1 (home screen Dp11), first state-quantity information representing a first state quantity of the work machine 3 is displayed. Furthermore, below the second object Ob2 in the display screen Dp1 (home screen Dp11), second state-quantity information representing a second state quantity of the work machine 3 is displayed. In this Embodiment, the cooling-water temperature information G1 disposed on the right side of the third object Ob3 is an example of the "first state-quantity information", and the residual quantity information G2 disposed on the left side of the third object Ob3 is an example of the "second state-quantity information". That is, in this Embodiment, the cooling water temperature is an example of the "first state quantity" of the work machine 3, and the residual quantity of the monitoring target (fuel, here) is an example of the "second state quantity" of the work machine 3.

As a result, the first object Ob1 and the second object Ob2 corresponding to the direction indicators 35 can be displayed by being clearly distinguished from the "first state-quantity information" (the cooling-water temperature information G1) and the "second state-quantity information" (the residual quantity information G2). Furthermore, the first object Ob1 and the second object Ob2 can be visually recognized naturally by the operator when viewing the first state-quantity information and the second state-quantity information of the work machine 3.

Furthermore, the first state-quantity information (the cooling-water temperature information G1) and the second state-quantity information (the residual quantity information G2) are information in which the respective state quantities are indexed and represented in a graph format, and are symmetrical in the display screen Dp1 (the home screen Dp11). That is, the cooling-water temperature information G1, which represents an analog meter, and the residual quantity information G2, which is a bar graph, have symmetrical positions and symmetrical shapes with respect to a symmetrical line passing through the center of the home screen Dp11 in the lateral direction (left-right direction). As a result, visibility of the first state-quantity information and the second state-quantity information is improved for the operator.

Moreover, in this Embodiment, in the display screen Dp1 (home screen Dp11), in a band area that includes the first object Ob1 and the second object Ob2 and extends across both the side edges (231, 232) in the left-right direction of the display area, only the first object Ob1 and the second object Ob2 are displayed. In this Embodiment, an eighth area R8 including the first area R1 and the second area R2 is an example of the "band area". In other words, in the home screen Dp11, other information is not displayed in the same row as the first object Ob1 and the second object Ob2. However, as shown in FIG. 5, the letter "H" of the cooling-water temperature information G1 and the letter "F" of the residual quantity information G2 are not information particularly indicating the operation state of the work machine 3 and thus, they may be included in the band area (the eighth area R8). As a result, it is easy to ensure sufficient visibility of the first object Ob1 and the second object Ob2.

Moreover, in this Embodiment, first time information related to time is displayed at an upper right corner part of the display screen Dp1 (home screen Dp11), and second time information related to time is displayed at an upper left corner part of the display screen Dp1 (home screen Dp11). The first object Ob1 is disposed below the first time information on the display screen Dp1 (home screen Dp11), and the second object Ob2 is disposed below the second time information on the display screen Dp1 (home screen Dp11). In this Embodiment, operating time information I31 related to the operating time of the work machine 3 displayed in the fifth area R5 is an example of the "first time information", and time information I32 displayed in the sixth area R6 is an example of the "second time information".

As a result, the first object Ob1 and the second object Ob2 corresponding to the direction indicators 35 can be displayed by being clearly distinguished from the first time information and the second time information. Moreover, the operator can visually recognize the first object Ob1 and the second object Ob2 naturally when viewing the first time information and the second time information.

### [3.2] Operation Menu

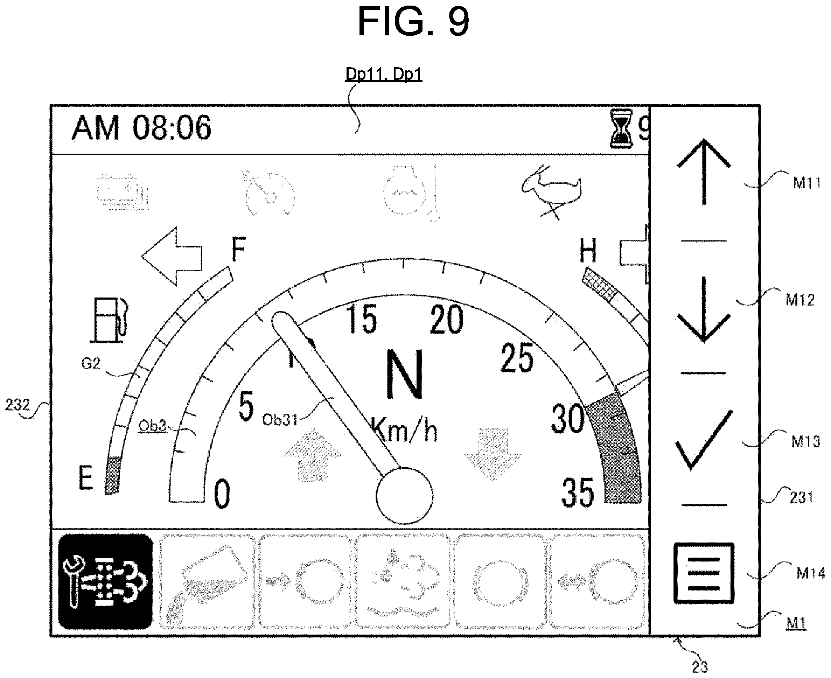

Subsequently, with reference to FIGS. 8 to 11, functions related to the operation menu M1 displayed in accordance with the operation of the operation portion 22 of the display device 2 will be explained. In the drawings showing the display screen Dp1 displayed on the display portion 23 of the display device 2 in FIG. 9 and the like, a one-dot chain line, a leading line, and a reference sign representing areas are given merely for explanation and are not actually displayed on the display device 2.

As shown in the upper stage of FIG. 8, when the user U1 (operator) performs a specific operation on the operation portion 22 of the display device 2 in a state where the home screen Dp11 is displayed as the display screen Dp1 on the display portion 23 of the display device 2, the display screen Dp1 changes as shown in the lower part of FIG. 8. That is, the operation menu M1 is displayed on the home screen Dp11 as the display screen Dp1. In this Embodiment, a specific operation (hereinafter, also referred to as a "first specific operation") on the operation portion 22 for causing the operation menu M1 to be displayed on the home screen Dp11 is assumed to be an operation (pressing operation) of a specific push button switch 224 in the plurality of push button switches 221 to 224.

Here, as shown in FIG. 9, the operation menu M1 is displayed at the right end part of the display screen Dp1 along the right side edge 231 of the display area of the display portion 23. In the home screen Dp11, the operation menu M1 is superimposed and displayed on the home screen Dp11 (see FIG. 5 and the like) in a state where the operation menu M1 is not displayed, as in a pop-up display. The operation menu M1 is a band-shaped (rectangular) object having a length in the vertical direction (up-down direction) of the display screen Dp1. In the example of FIG. 9, the operation menu M1 has a width of approximately 15% of the entire display screen Dp1 in the lateral direction (left-right direction). Therefore, when the operation menu M1 is displayed, an area with the width of approximately 15% from the right end of the home screen Dp11 is hidden by the operation menu M1.

Therefore, the figure I19 in the fourth area R4 and the figure 127 in the seventh area R7 and the like hidden by the operation menu M1 are preferably set as information having relatively low importance.

For example, in the home screen Dp11, information having a small influence on the driving (operation) of the work machine 3 is preferably displayed at a position hidden by the operation menu M1.

The operation menu M1 displayed along the right side edge 231 of the display area of the display portion 23 as above is displayed at a position corresponding to the operation portion 22 in the display screen Dp1. That is, while the plurality of push button switches 221 to 224 in the operation portion 22 are disposed adjacent to the right side edge 231 of the display area of the display portion 23, the operation menu M1 displayed along the right side edge 231 of the display area of the display portion 23 in the display screen Dp1 is displayed adjacent to the operation portion 22.

The operation menu M1 includes a plurality of (four in this Embodiment) items M11 to M14 for operations on the display screen Dp1. The plurality of items M11 to M14 are disposed to be aligned in the longitudinal direction of the operation menu M1 (the vertical direction of the display screen Dp1). The item M11 is an item for "up cursor", the item M12 is an item for "down cursor", the item M13 is an item for "decide", and the item M14 is an item for operation of the "menu".

As shown in FIG. 8, the four items M11 to M14 are associated respectively with the four push button switches 221 to 224 of the operation portion 22 located on the right side thereof. For example, the push button switch 221 is associated with the item M11 of the "up cursor", and the push button switch 222 is associated with the item M12 of the "down cursor", respectively. Similarly, the push button switch 223 is associated with the item M13 of the "decide", and the push button switch 224 is associated with the item M14 of the "menu", respectively. Therefore, when the push button switch 221 corresponding to the item M11 of the "up cursor" is operated by the user U1 in a state where the operation menu M1 is displayed, the item M11 of the "up cursor" is operated (selected). Moreover, when the push button switch 224 corresponding to the item M14 of the "menu" is operated by the user U1 in a state where the operation menu M1 is displayed, the item M14 of the "menu" is operated (selected).

Specifically, when a specific operation of the operation portion 22 is performed in a state where the operation menu M1 is displayed on the home screen Dp11, the display screen Dp1 displayed on the display portion 23 transitions from the home screen Dp11 to a menu screen Dp12. The specific operation on the operation portion 22 for transitioning from the home screen Dp11 to the menu screen Dp12 (hereinafter also referred to as a "second specific operation") is assumed to be an operation (pressing operation) of a specific push button switch 224 among the plurality of push button switches 221 to 224. The operation menu M1 is continuously displayed even after the transition from the home screen Dp11 to the menu screen Dp12.

As shown in FIG. 10, the menu screen Dp12 includes the operation menu M1 at the right end part thereof and is the display screen Dp1 for causing the display device 2 to execute detailed operations. The menu screen Dp12 has a plurality of (nine, here) options C21 to C29. Individual functions are assigned to the plurality of options C21 to C29, respectively. In the menu screen Dp12, when an operation of decision is performed in a state where any one of the plurality of options C21 to C29 is selected, the display screen Dp1 is changed in accordance with the function assigned to the selected option.

Specifically, in the menu screen Dp12, the display mode such as the display color of the selected options C21 to C29 is changed (in the example of FIG. 10, they are displayed in a shaded manner). The selected option is changed in accordance with the operation of the item M11 of the "up cursor" (the operation of the push button switch 221) or the operation of the item M12 of the "down cursor" (the operation of the push button switch 222). Specifically, each time the item M12 of the "down cursor" is operated, the selected option changes in the order of the option C21, the option C22, the option C23, ... the option C29, and each time the item M11 of the "up cursor" is operated, the selected option changes in the order of the option C29, the option C28, the option C27, ... the option C21. When the item M13 of "decide" is operated (the push button switch 223 is operated) in a state where any one of the options is selected, the display screen Dp1 is changed in accordance with the function assigned to the selected option.

As an example, as exemplified in FIG. 10, when the item M13 of "decide" is operated (operation of the push button switch 223) in a state where the option C21 of the display setting is selected, the display screen Dp1 transitions from the menu screen Dp12 to the setting screen Dp13. A specific operation (hereinafter, also referred to as a "third specific operation") on the operation portion 22 for transitioning from the menu screen Dp12 to the setting screen Dp13 is assumed to be an operation (pressing operation) of the specific push button switch 223 among the plurality of push button switches 221 to 224 in a state where any one of the options is selected.

The operation menu M1 is continuously displayed even after the transition from the menu screen Dp12 to the setting screen Dp13.

As shown in FIG. 11, the setting screen Dp13 includes the operation menu M1 at the right end part thereof and is a display screen Dp1 for causing the display device 2 to execute the detailed operations. The setting screen Dp13 includes a plurality of (three, here) options C31 to C33. Individual functions are assigned to the plurality of options C31 to C33, respectively. In the setting screen Dp13, when the operation of decision is performed in a state where any one of the plurality of options C31 to C33 is selected, the display screen Dp1 is changed in accordance with the function assigned to the selected option.

Specifically, on the setting screen Dp13, the display mode such as the display color of the selected options C31 to C33 is changed (in the example of FIG. 11, they are displayed in a shaded manner). The selected option is changed in accordance with the operation of the item M11 of the "up cursor" (the operation of the push button switch 221) or the operation of the item M12 of the "down cursor" (the operation of the push button switch 222). Specifically, each time the item M12 of the "down cursor" is operated, the selected option changes in the order of the option C31, the option C32, and the option C33, and each time the item M11 of the "up cursor" is operated, the selected option changes in the order of the option C33, the option C32, and the option C31. When the item M13 of "decide" is operated (the push button switch 223 is operated) in a state where any one of the options is selected, the display screen Dp1 is changed in accordance with the function assigned to the selected option.

As an example, as exemplified in FIG. 11, when the item M13 of "decide" is operated (the operation of the push button switch 223) in a state where the option C31 of language setting is selected, the display screen Dp1 transitions from the setting screen Dp13 to a further lower level screen for the language setting. The operation menu M1 is continuously displayed even after the transition from the setting screen Dp13 to a further lower level screen.

Moreover, when the specific operation of the operation portion 22 is performed in a state where the menu screen Dp12 or the setting screen Dp13 is displayed, the display screen Dp1 displayed on the display portion 23 transitions to the previous screen. That is, in a state where the menu screen Dp12 is displayed, the display screen Dp1 transitions to the previous home screen Dp11, and in a state where the setting screen Dp13 is displayed, the display screen Dp1 transitions to the previous menu screen Dp12. A specific operation (hereinafter, also referred to as a "fourth specific operation") on the operation portion 22 for transitioning from the menu screen Dp12 to the home screen Dp11 is assumed to be an operation (pressing operation) of the specific push button switch 224 among the plurality of push button switches 221 to 224. A specific operation (hereinafter, also referred to as a "fifth specific operation") on the operation portion 22 for transitioning from the setting screen Dp13 to the menu screen Dp12 is assumed to be an operation (pressing operation) of the specific push button switch 224 among the plurality of push button switches 221 to 224.

The operation menu M1 is also displayed on the display screen Dp1 other than the home screen Dp11 such as the menu screen Dp12, the setting screen Dp13 and the like, for example. However, among the home screen Dp11, the menu screen Dp12, and the setting screen Dp13, display / non-display of the operation menu M1 can be switched only on the home screen Dp11. That is, for the home screen Dp11, as shown in FIG. 8, there are a state where the operation menu M1 is not displayed and a state where the operation menu M1 is displayed, while for the menu screen Dp12 (see FIG. 10) and the setting screen Dp13 (see FIG. 11), the operation menu M1 is displayed all the time.

Here, as described above, in order for the display processing portion 12 to display the operation menu M1 on the home screen Dp11, the specific operation (operation of the push button switch 224) of the operation portion 22 is required.

On the other hand, in order for the display processing portion 12 not to display the operation menu M1 on the home screen Dp11, it is necessary that the operation portion 22 is not operated for non-operating time. Specifically, in a state where the operation menu M1 is displayed on the home screen Dp11, if none of the plurality of push button switches 221 to 224 of the operation portion 22 is operated for the non-operating time (a certain period of time such as 30 seconds or one minute as an example), the display processing portion 12 does not display the operation menu M1.

As described above, the control method according to this Embodiment includes acquiring of the operation information related to the operation of the operation portion 22 of the display device 2 for the work machine 3. This control method further includes causing the display screen Dp1 to be displayed on the display portion 23 of the display device 2. This control method further includes causing the operation menu M1 to be displayed at a position corresponding to the operation portion 22 in the display screen Dp1 on the basis of the operation information. This control method further includes changing of the display screen Dp1 on the basis of the operation menu M1 according to the operation of the operation portion 22 in a state where the operation menu M1 is displayed.

According to this configuration, the operation menu M1 for accepting the operation of the operation portion 22 on the display screen Dp1 is displayed on the basis of the operation information related to the operation of the operation portion 22 of the display device 2. As a result, the operation menu M1 is displayed only when the user U1 indicates an intention to operate the display device 2, and the operation menu M1 can be made non-display when the operation menu M1 is not needed. Therefore, reduction in the display area other than the operation menu M1 in the display screen Dp1 due to displaying of the operation menu M1 is suppressed, and reduction in the amount of information that can be displayed here or lowering of the visibility due to a decrease in the display size of each piece of information can be suppressed. As a result, the control method according to this Embodiment has an advantage that the reduction in the amount of information that can be displayed on the display device 2 and the lowering of visibility are less likely to occur.

Moreover, the operation portion 22 includes the plurality of switches (push button switches 221 to 224), and the operation menu M1 includes the plurality of items M11 to M14 respectively corresponding to the plurality of switches (push button switches 221 to 224). In this Embodiment, the items M11 to M14 and the switches (push button switches 221 to 224) adjacent to each other are associated with each other. As a result, by means of the operation menu M1, operations corresponding to the plurality of items M11 to M14 can be assigned to the plurality of switches (push button switches 221 to 224) in the operation portion 22. Therefore, improvement of the operability of the operation portion 22 can be promoted easily.

Moreover, the control method according to this Embodiment includes causing the operation information related to the operation state of the work machine 3 to be displayed in a notification area having a length in the direction intersecting with the alignment direction of the plurality of items M11 to M14. The seventh area R7 of the home screen Dp11 is an example of the "notification area", and the figures I21 to I27 displayed in the seventh area R7 are examples of the "operation information". In this Embodiment, since the plurality of items M11 to M14 are aligned in the vertical direction of the display screen Dp1, the notification area (seventh area R7) has a length in the lateral direction intersecting with (orthogonal to) that. As a result, layout of the display screen Dp1 can be effectively used, and the lowering of the visibility of the display screen Dp1 due to the operation menu M1 being displayed can be suppressed easily.

Moreover, in this Embodiment, the notification area (the seventh area R7) is located in a lower part of the display screen Dp1 (the home screen Dp11). As a result, layout of the display screen Dp1 can be effectively used, and the lowering of the visibility of the display screen Dp1 due to the operation menu M1 being displayed can be suppressed easily.

Moreover, the control method according to this Embodiment includes causing the operation menu M1 not to be displayed when the operation portion 22 is not operated for the non-operating time after the display of the operation menu M1 is started. According to this configuration, in a case where the operator does not intend to operate the display device 2 in a state where the operation menu M1 is displayed on the home screen Dp11 as the display screen Dp1, it is possible to display the entire home screen Dp11 by causing the operation menu M1 not to be displayed. Here, the "non-operating time" may be a fixed time (30 seconds or 1 minute, for example) as described above, or is not limited to the fixed time. For example, the length of the non-operating time may be changed in accordance with conditions related to the state of the operator (whether or not the operator is viewing the display device 2 or the like), the operation state of the work machine 3 (whether it is traveling or not), a time zone or the like. Specifically, such a form is preferable that the non-operating time becomes short during the work by the work machine 3, or the non-operating time becomes infinite while the work machine 3 is stopped.

Moreover, the control method according to this Embodiment further includes causing the display screen Dp1 to transition from the first screen to the second screen when the specific operation of the operation portion 22 is performed in a state where the operation menu M1 is displayed. The home screen Dp11 is an example of the "first screen", and the menu screen Dp12 is an example of the "second screen". Here, the specific operation (second specific device) of the operation portion 22 for transitioning from the first screen (home screen Dp11) to the second screen (menu screen Dp12) may be the same as or different from the specific operation (first specific operation) of the operation portion 22 for causing the operation menu M1 to be displayed on the home screen Dp1. According to this configuration, since the operator can operate the operation portion 22 while referring to the operation menu M1, when the display screen Dp1 is transitioned from the first screen to the second screen, it is easy for the operator to improve the operability.

Moreover, at the transition from the first screen (home screen Dp11) to the second screen (menu screen Dp12), the operation menu M1 is continuously displayed also on the second screen (menu screen Dp12). That is, the operation menu M1 displayed on the first screen (home screen Dp11) is displayed as it is even after the transition to the second screen (menu screen Dp12). As a result, the operator can operate the operation portion 22 while referring to the operation menu M1 even on the second screen and thus, it is easy for the operator to improve the operability.

Moreover, the control method according to this Embodiment includes causing the display screen Dp1 to transition from the second screen (menu screen Dp12) to the first screen (home screen Dp11) by the specific operation of the operation portion 22 being performed in a state where the second screen (menu screen Dp12) is displayed. Here, the specific operation (fourth specific device) of the operation portion 22 for transitioning from the second screen (menu screen Dp12) to the first screen (home screen Dp11) may be the same as or different from the first specific operation or the second specific operation. According to this configuration, since the operator can operate the operation portion 22 while referring to the operation menu M1, when the display screen Dp1 is transitioned from the second screen to the first screen, it is easy for the operator to improve the operability.

Moreover, the control method according to this Embodiment includes causing the display screen Dp1 to transition from the second screen to the third screen by the specific operation of the operation portion 22 being performed in a state where the second screen is displayed. The menu screen Dp12 is an example of the "second screen", and the setting screen Dp13 is an example of the "third screen". Here, the specific operation (third specific device) of the operation portion 22 for transitioning from the second screen (menu screen Dp12) to the third screen (setting screen Dp13) may be the same as or different from the first specific operation, the second specific operation, or the fourth specific operation. According to this configuration, when the display screen Dp1 is transitioned from the second screen to the third screen, the operator can operate the operation portion 22 while referring to the operation menu M1 and thus, it is easy for the operator to improve the operability.

Moreover, the control method according to this Embodiment includes causing the display screen Dp1 to transition from the third screen (setting screen Dp13) to the second screen (menu screen Dp12) by the specific operation of the operation portion 22 being performed in a state where the third screen (setting screen Dp13) is displayed. Here, the specific operation (fifth specific device) of the operation portion 22 for transitioning from the third screen (setting screen Dp13) to the second screen (menu screen Dp12) may be the same as or different from the first specific operation, the second specific operation, the third specific operation, or the fourth specific operation. According to this configuration, since the operator can operate the operation portion 22 while referring to the operation menu M1, when the display screen Dp1 is transitioned from the third screen to the second screen, it is easy for the operator to improve the operability.

### [3. 3] Flowchart

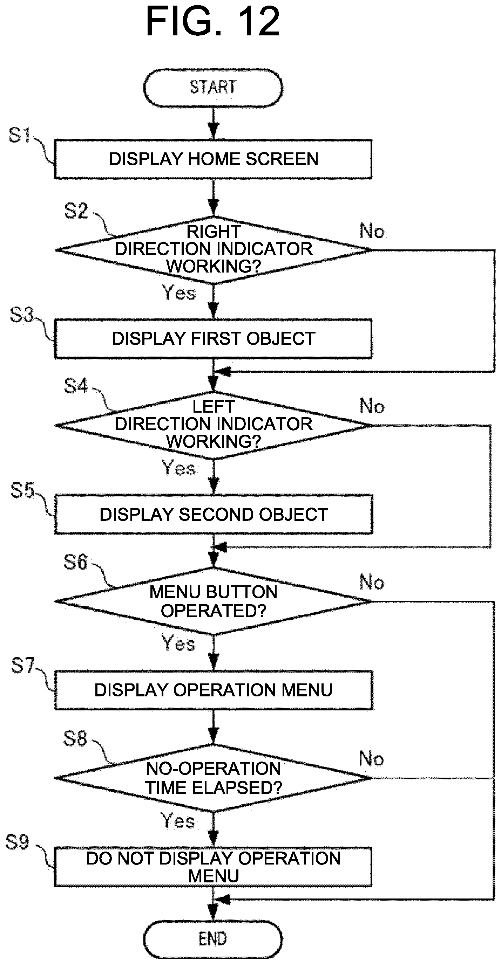

FIG. 12 is a flowchart showing an example of major processing related to the control method according to this Embodiment.

As shown in FIG. 12, the display processing portion 12 first displays the home screen Dp11 on the display portion 23 of the display device 2 (S1). At this time, the acquisition processing portion 11 acquires information related to the operation state of the direction indicator 35, and the display processing portion 12 determines whether or not the direction indicator 35 on the right side is working (S2). When the direction indicator 35 on the right side is working (S2: Yes), the display processing portion 12 displays the first object Ob1 in the first area R1 of the home screen Dp11 (S3). On the other hand, when the direction indicator 35 on the right side is not working (S2: No), the display processing portion 12 skips the processing S3 and proceeds to the processing S4.

At the processing S4, the display processing portion 12 determines whether or not the direction indicator 35 on the left side is working. When the direction indicator 35 on the left side is working (S4: Yes), the display processing portion 12 displays the second object Ob2 in the second area R2 of the home screen Dp11 (S5). On the other hand, when the direction indicator 35 on the left side is not working (S4: No), the display processing portion 12 skips the processing S5 and proceeds to the processing S6.

At the processing S6, the display processing portion 12 determines whether or not the menu button (push button switch 224) was operated on the basis of the operation information of the operation portion 22 acquired by the acquisition processing portion 11. If the menu button (push button switch 224) has been operated (S6: Yes), the display processing portion 12 displays the operation menu M1 at the right end part of the home screen Dp11 (S7). On the other hand, if the menu button (push button switch 224) has not been operated (S6: No), the display processing portion 12 skips the processing S7 or the like and ends the series of processing.

At the processing S8, the display processing portion 12 determines whether or not non-operating time has elapsed in a state where the operation portion 22 has not been operated after the operation menu M1 was displayed. When the non-operating time elapses while the operation portion 22 is not operated (S8: Yes), the display processing portion 12 causes the operation menu M1 on the home screen Dp11 not to be displayed (S9). On the other hand, if the non-operating time has not elapsed (S8: No), the display processing portion 12 skips the processing S9 and ends the series of processing.

However, the flowchart shown in FIG. 12 is merely an example, and processing may be added or omitted as appropriate, and the order of the processing may be changed as appropriate.

### [4] Variation

Variations of First Embodiment will be listed below. The variations explained below can be applied in combination as appropriate.

The control system 1 in this disclosure includes a computer system. The computer system is configured mainly by one or more processors and one or more memories as hardware. The processor executes a program recorded in the memory of the computer system, thereby realizing a function as the control system 1 in this disclosure. The program may be recorded in the memory of the computer system in advance, may be provided through an electric communication line, or may be provided by being recorded in a non-transitory recording medium readable by the computer system, such as a memory card, an optical disk, or a hard disk drive. Moreover, some or all of the functional portions included in the control system 1 may be configured by an electronic circuit.

Moreover, such a configuration that at least some of the functions of the control system 1 are integrated in one housing is not indispensable for the control system 1, and constituent elements of the control system 1 may be provided in a distributed manner in a plurality of housings. On the contrary, in First Embodiment, functions distributed in the plurality of devices (for example, the control system 1 and the display device 2) may be integrated in one housing. Furthermore, at least some of the functions of the control system 1 may be realized by a cloud (cloud computing) or the like.

Moreover, the display device 2 is not limited to a dedicated device and may be, for example, a general-purpose terminal such as a laptop computer, a tablet terminal, or a smart phone. Furthermore, the display portion 23 is not limited to a mode in which a display screen is displayed directly such as a liquid crystal display or an organic EL display, and may be configured to display a display screen by projection such as a projector.

Moreover, as a mode of inputting information of the operation portion 22, modes other than the push button switch, the touch panel or the operation dial may be adopted. For example, as the operation portion 22, a mode of a pointing device such as a keyboard, a mouse or the like, a voice input, a gesture input, input of an operation signal from another terminal or the like may be adopted.

Moreover, the mode related to the display of the operation menu M1 may change in accordance with the operation state of the work machine 3, for example. For example, it is preferable that, when the work machine 3 is in operation (working), a display range (size) of the operation menu in the display screen Dp1 is made smaller, while the display range (size) of the operation menu in the display screen Dp1 is made larger, when the work machine 3 is stopped (not working). Furthermore, for example, display of the operation menu on the home screen Dp11 may be prohibited when the work machine 3 is in operation (working).

Moreover, the power source 4 of the work machine 3 is not limited to a diesel engine and may be, for example, an engine other than the diesel engine, a motor (electric motor), or a hybrid-type power source including an engine and a motor (electric motor).

### (Embodiment 2)

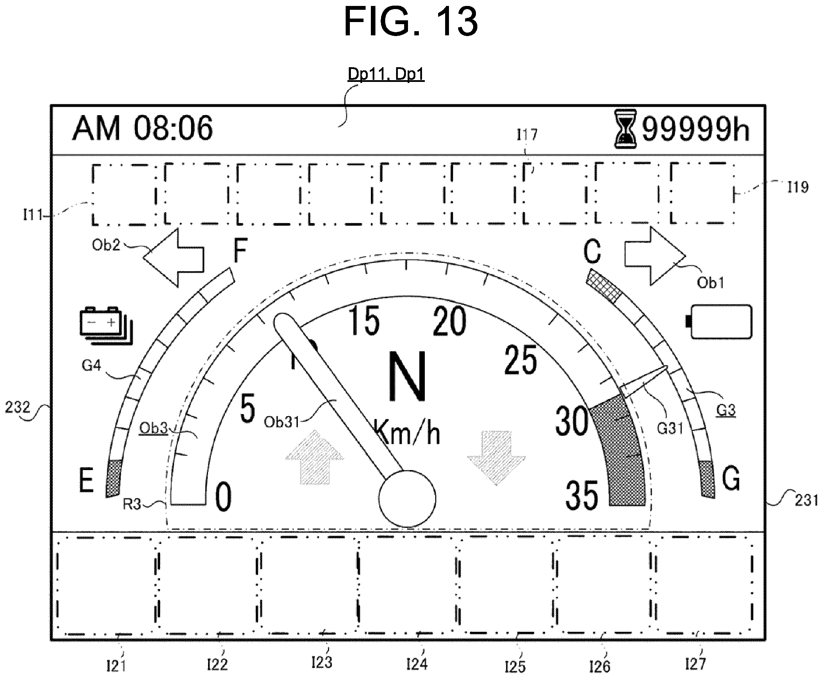

As shown in FIG. 13, the work machine 3 according to this Embodiment is different from the work machine 3 according to Embodiment 1 in the display content of the home screen Dp11. Hereinafter, the same configurations as those in Embodiment 1 will be given the same reference numerals, and the explanation thereof will be omitted as appropriate.

In this Embodiment, it is assumed that the power source 4 of the work machine 3 is an electric motor. In this case, the power source 4 is driven by electric power supplied from the battery for traveling.

Here, instead of the cooling-water temperature information G1, current consumption information G3 indicating current consumption in the power source 4 (electric motor) is displayed on the right side of the third area R3 in the home screen Dp11.

On the left side of the third area R3 in the home screen Dp11, residual quantity information G4 indicating a residual quantity (SOC: State Of Charge) of the battery for traveling is displayed. That is, the current consumption information G3 is disposed below the first area R1 in the home screen Dp11, and the residual quantity information G4 is disposed below the second area R2 in the home screen Dp11.

Similarly to the third object Ob3, the current consumption information G3 is a graph representing an analog meter. In the analog meter, a needle G31 rotates, and a value is presented by the position of the needle G31. The residual quantity information G4 is a bar graph. That is, the residual quantity information G4 is information in which the residual quantity of the monitoring target (the battery for traveling, here) is indexed and represented by lengths (heights) of the bar graphs.

As described above, for example, the display mode (display content) of the display screen Dp1 may differ depending on the specifications of the work machine 3 such as the power source 4. Thus, it is preferable that the display mode of the display screen Dp1 displayed on the display portion 23 of the display device 2 is switchable by operating the display device 2 in a maintenance mode. As a result, for example, the display device 2 itself can be shared between the work machine 3 in which the power source 4 is an engine and the work machine 3 in which the power source 4 is an electric motor.

The configuration according to Embodiment 2 can be adopted by being combined with the various configurations (including the variations) described in Embodiment 1 as appropriate.

### [Supplementary Note of the Invention]

Hereinafter, the summary of the invention extracted from the above-described embodiments will be supplemented. Note that each of the configurations and processing functions described in the following supplementary notes can be selected and arbitrarily combined.

### <Supplementary Note 1>

A control method of work machine, including
acquiring operation information related to an operation of an operation portion of a display device for a work machine,
causing a display screen to be displayed on a display portion of the display device,
causing an operation menu to be displayed at a position corresponding to the operation portion in the display screen on the basis of the operation information, and
changing the display screen on the basis of the operation menu according to the operation of the operation portion in a state where the operation menu is displayed.

### <Supplementary Note 2>

The control method of work machine described in Supplementary Note 1, in which
the operation portion includes a plurality of switches, and
the operation menu includes a plurality of items corresponding to the plurality of the plurality of switches, respectively.

### <Supplementary Note 3>

The control method of work machine described in Supplementary Note 2, further including
causing operation information related to an operation state of the work machine to be displayed in a notification area having a length in a direction intersecting with an alignment direction of the plurality of items.

### <Supplementary Note 4>

The control method of work machine described in Supplementary Note 3, in which
the notification area is located in a lower part in the display screen.

### <Supplementary Note 5>

The control method of work machine described in any one of Supplementary Notes 1 to 4, further including
causing the operation menu not to be displayed when the operation portion is not operated for non-operation time after display of the operation menu is started.

### <Supplementary Note 6>

The control method of work machine described in any one of the Supplementary Notes 1 to 5, further including
causing the display screen to transition from a first screen to a second screen, when a specific operation of the operation portion is performed in a state where the operation menu is displayed.

### <Supplementary Note 7>

The control method of work machine described in Supplementary Note 6, in which
the operation menu is continuously displayed also on the second screen.

### <Supplementary Note 8>

The control method of work machine described in Supplementary Note 6 or 7, further including
causing the display screen to transition from the second screen to the first screen, when a specific operation of the operation portion is performed in a state where the second screen is displayed.

### <Supplementary Note 9>

The control method of work machine described in any one of Supplementary Notes 6 to 8, further including
causing the display screen to transition from the second screen to a third screen, when a specific operation of the operation portion is performed in a state where the second screen is displayed.

### <Supplementary Note 10>

The control method of work machine described in Supplementary Note 9, further including
causing the display screen to transition from the third screen to the second screen, when a specific operation of the operation portion is performed in a state where the third screen is displayed.

### <Supplementary Note 11>

A control program for work machine, in which
the control method of work machine described in any one of Supplementary Notes 1 to 10 is executed by one or more processors.

### REFERENCE SIGNS LIST

2 Display device
3 Work machine
10 Display system for work machine
11 Acquisition processing portion
12 Display processing portion
22 Operation portion
23 Display portion
30 Machine body
221 to 224 Push button switch (switch)
Dp1 Display screen
Dp11 Home screen (first screen)
Dp12 Menu screen (second screen)
Dp13 Setting screen (third screen)
I21 to I27 Figures (operation information)
M1 Operation menu
M11 to M14 Item
R7 Seventh area (notification area)

## Claims

1. A control method of work machine, comprising
acquiring operation information related to an operation of an operation portion of a display device for a work machine,
causing a display screen to be displayed on a display portion of the display device;
causing an operation menu to be displayed at a position corresponding to the operation portion in the display screen on the basis of the operation information, and
changing the display screen on the basis of the operation menu according to an operation of the operation portion in a state where the operation menu is displayed.

2. The control method of work machine according to claim 1, wherein
the operation portion includes a plurality of switches; and
the operation menu includes a plurality of items corresponding to the plurality of the plurality of switches, respectively.

3. The control method of work machine according to claim 2, further comprising:
causing operation information related to an operation state of the work machine to be displayed in a notification area having a length in a direction intersecting with an alignment direction of the plurality of items.

4. The control method of work machine according to claim 3, wherein
the notification area is located in a lower part in the display screen.

5. The control method of work machine according to any one of claims 1 to 4, further comprising
causing the operation menu not to be displayed, when the operation portion is not operated for non-operation time after display of the operation menu is started

6. The control method of work machine according to any one of claims 1 to 4, further comprising
causing the display screen to transition from a first screen to a second screen, when a specific operation of the operation portion is performed in a state where the operation menu is displayed.

7. The control method of work machine according to claim 6, wherein
the operation menu is continuously displayed also on the second screen.

8. The control method of work machine according to claim 6, further comprising
causing the display screen to transition from the second screen to the first screen, when a specific operation of the operation portion is performed in a state where the second screen is displayed

9. The control method of work machine according to claim 6, further comprising
causing the display screen to transition from the second screen to a third screen, when a specific operation of the operation portion is performed in a state where the second screen is displayed.

10. The control method of work machine according to claim 9, further comprising
causing the display screen to transition from the third screen to the second screen, when a specific operation of the operation portion is performed in a state where the third screen is displayed.

11. A control program for work machine, wherein
the control method of work machine according to any one of claims 1 to 4 is executed by one or more processors.

12. A display system for work machine, comprising:
a display device for work machine;
an acquisition processing portion that acquires operation information related to an operation of an operation portion of the display device; and
a display processing portion that causes a display screen to be displayed on a display portion of the display device, wherein
the display processing portion
causes an operation menu to be displayed at a position corresponding to the operation portion in the display screen on the basis of the operation information; and
in a state where the operation menu is displayed, the display screen is changed on the basis of the operation menu according to an operation of the operation portion.

13. A work machine comprising:
the display system for work machine according to claim 12; and
a machine body on which the display device is mounted.
